# EUROPÄISCHE PATENTSCHRIFT

(11) **EP 1 754 404 B1**
(45) Veröffentlichungstag und Bekanntmachung des Hinweises auf die Patenterteilung: **03.03.2010**
(21) Anmeldenummer: 06016061.1
(22) Anmeldetag: 02.08.2006
(51) Int. Cl.: A01B 33/08

(54) **Kreiselegge**
Rotary harrow
Herse rotative

(30) Priorität: 18.08.2005 DE 102005039031
(43) Veröffentlichungstag der Anmeldung: 21.02.2007
(73) Patentinhaber: Amazonen-Werke H. Dreyer GmbH & Co. KG, 49205 Hasbergen (DE)
(72) Erfinder: Tiessen, Reimer Uwe, 26135 Oldenburg (DE); Reinke, Wilfried, 26123 Oldenburg (DE); Gieseke, Reinhard, 27798 Hude (DE)

(56) Entgegenhaltungen:
- EP-A- 1 574 120
- EP-A2- 1 295 520
- DE-A1-102004 026 388
- NL-A- 9 001 032

## Beschreibung

Die Erfindung betrifft eine Kreiselegge gemäß des Oberbegriffes des Patentanspruches 1.

Eine derartige Kreiselegge ist beispielsweise in der EP 12 95 520 A2 beschrieben. Bei dieser Kreiselegge ragt das Ritzel des Hauptgetriebes in die Getriebewanne hinein und steht mit einem Stirnrad des die Kreisel antreibenden Stirnradgetriebes in Aritriebsverbindung. Die Antriebswelle des Hauptgetriebes, welche das Ritzel trägt, ist in dem Gehäuse des Hauptgetriebes gelagert. Das Hauptgetriebe ist über eine flanschartige Verbindung mit dem oberen Bereich der Getriebewanne bzw. dem Deckel verschraubt. Eine weitere Abstützung des Hauptgetriebes bzw. der Lagerung der Ritzelwelle ist nicht vorgesehen.

Der Erfindung liegt die Aufgabe zugrunde, eine sichere Abstützung der das Ritzel tragenden Antriebswelle des Hauptgetriebes gegenüber der Getriebewanne in einfacher Weise zu gewährleisten.

Diese Aufgabe wird erfindungsgemäß durch das kennzeichnende Merkmal des Patentanspruches 1 gelöst. Infolge dieser Maßnahme wird auch bei der Übertragung großer Antriebsleistungen gewährleistet, dass das Ritzel immer in der richtigen Antriebsverbindung zu dem Stirnrad des Stirnradgetriebes der Kreiselegge angeordnet bleibt. Hierbei stützt sich die Gehäusehülse in der Abstützhülse allseitig ab.

Eine gute Abstützung der Gehäusehülse wird dadurch erreicht, dass die Abstützhülse eine derartige Länge aufweist und derart weit in die Getriebewanne hineinragt, dass das untere Ende der Abstützhülse zumindest annähernd bis zur Höhe des Beginnes des unteren Lagers des Ritzels reicht.

Eine einfache Anordnung der Abstützhülse in der Getriebewanne ergibt sich dadurch, dass die Abstützhülse in die Getriebewanne eingeschweißt ist.

Eine sichere Anordnung der Abstützhülse in der Getriebewanne, lässt sich dadurch erreichen, dass die Abstützhülse mit ihrem unteren Bereich in einem Abstützelement an der Getriebewanne abgestützt ist.

Eine passgenaue Zuordnung von Gehäusehülse und Abstützhülse wird dadurch erreicht, dass die Gehäusehülse und die Abstützhülse mit einer gedrehten Passung zueinander angeordnet ist.

Eine weitere vorteilhafte Abstützung der Antriebswelle des Ritzels lässt sich dadurch erreichen, dass die Antriebswelle über das Ritzel verlängert ist und in einem im Bodenbereich der Getriebewanne angeordneten Lager gelagert ist.

Auch ist es möglich, die in die Getriebewanne hineinragende Gehäusehülse in die Getriebewanne einzuschweißen.

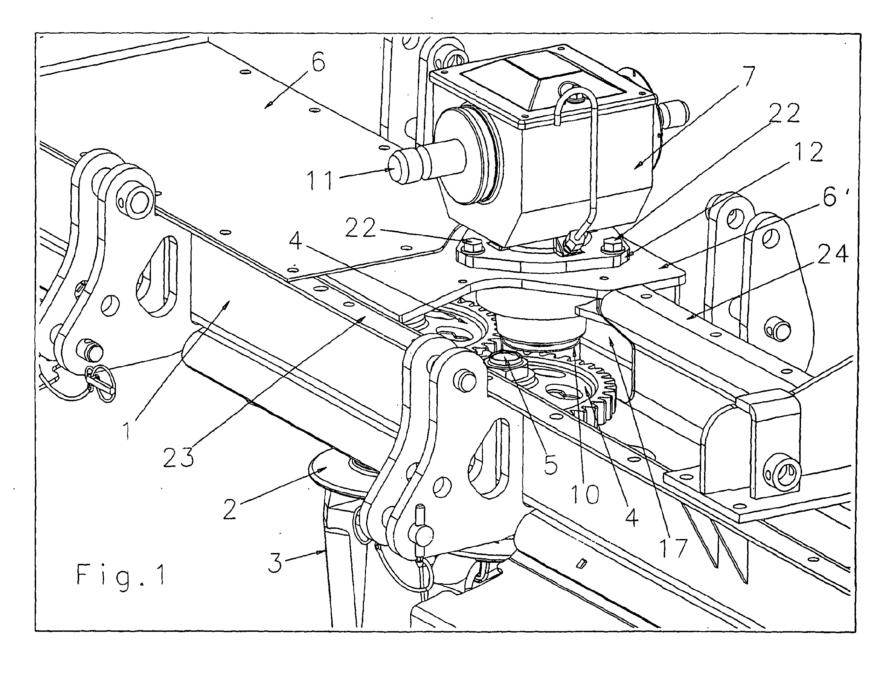

Weitere Einzelheiten der Erfindung sind den übrigen Unteransprüchen, der Beispielsbeschreibung und den Zeichnungen zu entnehmen. Hierbei zeigen
- Fig. 1: die Kreiselegge in perspektivischer Darstellung in Teilansicht und mit auf der rechten Seite abgenommenem Deckel der Getriebewanne,

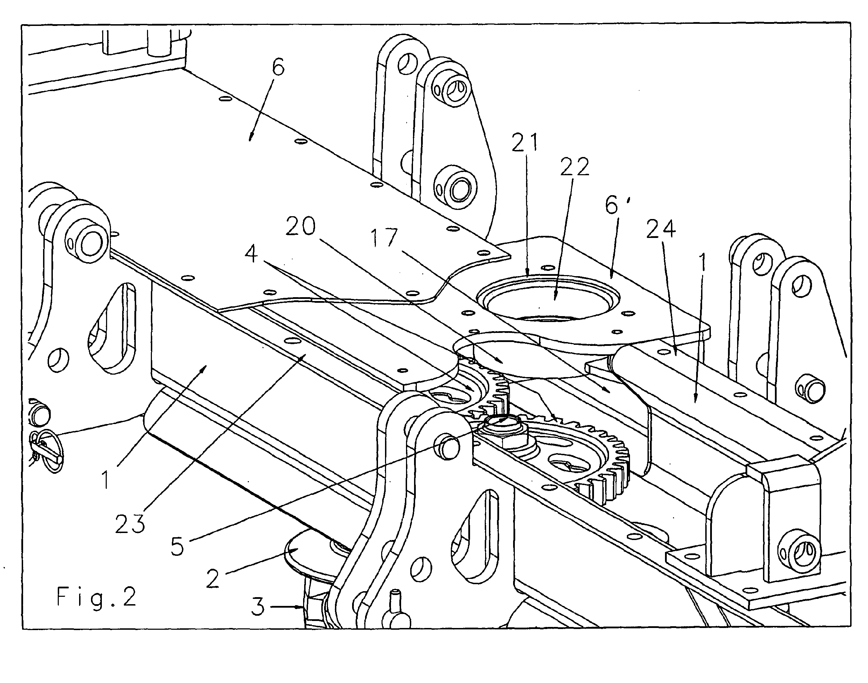

- Fig. 2: die Kreiselegge in perspektivischer Darstellung jedoch mit abgenommenem Hauptgetriebe,

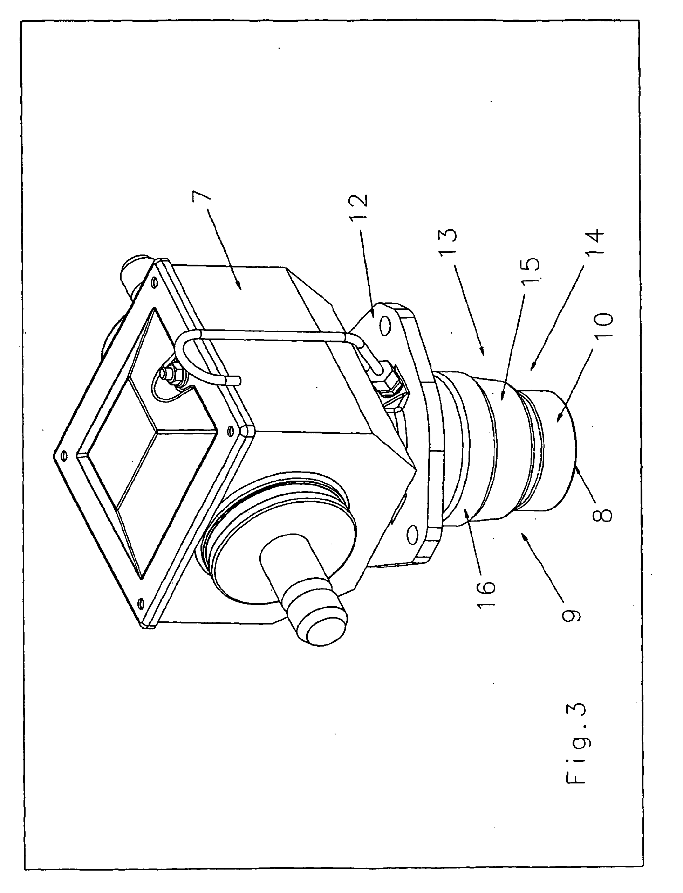

- Fig. 3: das Hauptgetriebe in perspektivischer Darstellung und

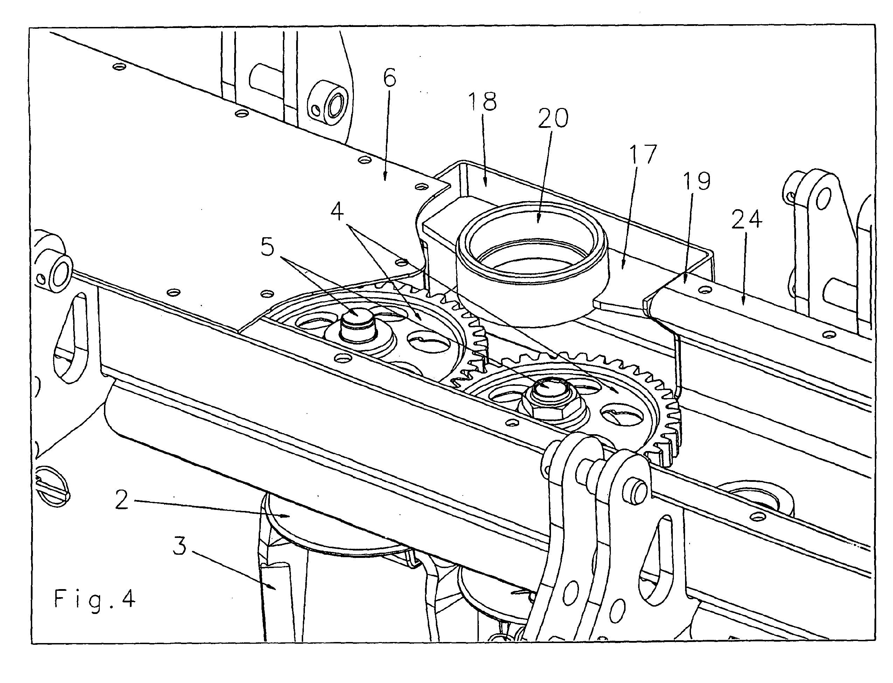

- Fig. 4: die Getriebewanne mit dem Stirnradgetriebe für die Werkzeugkreisel in perspektivischer und ausschnittsweise Darstellung.

Die Kreiselegge weist eine quer zur Fahrtrichtung lang gestreckte Getriebewanne 1, in der in bekannter und daher nicht näher dargestellter Weise in Abständen zueinander Werkzeugkreisel 2 gegensinnig rotierend angetrieben gelagert sind, auf. Die Werkzeugkreisel 2 tragen Werkzeuge 3. Die Werkzeugkreisel 2 werden über in der Getriebewanne 1 angeordneten und ineinander greifenden Stirnräder 4 gegensinnig rotierend angetrieben. Die Rotorwellen 5 der Werkzeugkreisel 2 sind mittels Lager in der Getriebewanne 1 gelagert. Die Getriebewanne 1 wird über Deckelelemente 6, die mit den oberen Bereichen der Getriebewanne 1 verschraubt sind, in bekannter Weise verschlossen. Die Stirnräder 4 des Stirnradtriebes für die Werkzeugkreisel 2 werden über das Hauptgetriebe 7 angetrieben. Hierzu ragt die in dem Gehäuse 8 des Hauptgetriebes 7 gelagert Antriebswelle 8 in die Getriebewanne 1 hinein. Das an dem unteren Ende 9 der Antriebswelle 8 angeordnet Ritzel 10, wobei der Einfachheithalber die Verzahnung des Ritzels 10 nicht dargestellt ist, greift in die Verzahnung eines der Stirnräder 4 des Stirnradgetriebes ein. Hierbei ist zumindest die Verzahnung des Stirnrades 4, die mit dem Ritzel 10 kämmt, gehärtet. Das Hauptgetriebe 7 wird mittels einer auf der Eingangswelle 11 angeordneten Gelenkwelle von der Zapfwelle des die Kreiselegge ziehenden Schleppers angetrieben. Das Hauptgetriebe 7 weist einen Flansch 12 auf, der mit dem oberen Bereich der Getriebewanne 1 bzw. des Deckels 6 verschraubt ist. Des weiteren weist das Hauptgetriebe 7 die in die Getriebewanne 1 hineinragende Getriebehülse 13 auf, in dem die Antriebswelle 8, welche an dem unteren Ende 9 das Antriebsritzel 10 trägt, gelagert ist. Die Getriebehülse 13 ist unterhalb des Flansches 12 angeordnet. Die Getriebehülse 13 weist an ihrem unteren Ende 14 oberhalb des Ritzels 10 in Bereich des Lagers der Ritzenwelle des Ritzels 10 einen Abstützbereich 15 sowie einen zweiten Abstützbereich 16 unterhalb des Flansches 12 auf. In der Getriebewanne 1 ist oberhalb der Stirnräder 4 ein Abstützelement 17 angeordnet. In dem Bereich 18, in dem das Ritzel 10 und die Getriebehülse 13 in der Getriebewanne 1 angeordnet sind, ist die hintere Wandung 19 der Getriebewanne 1 nach hinten vergrößert, um einen vergrößerten Getriebewannenbereich 18 für die Anordnung des Ritzels 10 und der Abstützhülse 20 zu schaffen.

In diesem vergrößerten Getriebewannenbereich 18 ist das Abstützelement 17 an der Getriebewanne 1 angeordnet. An dem Abstützelement 17 ist die Abstützhülse 20 angeordnet. Die Abstützhülse 20 stützt sich über das Abstützelement 17 an der Getriebewanne 1 ab. Die Abstützhülse 20 ist mit dem Abstützelement 17 verschweißt. Ebenfalls ist das Abstützelement 17 mit der Getriebewanne 1 verschweißt. Die Abstützhülse 20 ist derart in der Getriebewanne 1 angeordnet und sie weist eine derartige Länge auf, und ragt derart weit in die Getriebewanne 1 hinein, dass das untere Ende der Abstützhülse 20 zumindest annähernd bis zur Höhe des Beginnes des unteren Lagers des Ritzels 10 in der Gehäusehülse 13 reicht. Die Abstützhülse 20 ist in der Getriebewanne 1 eingeschweißt und hierbei über das Abstützelement 17, welches ebenfalls in die Getriebewanne 1 eingeschweißt ist, mit der Getriebewanne 1 verbunden. Über das Abstützelement 17 stützt sich die Abstützhülse 20 in ihrem unteren Bereich an der Getriebewanne 1 ab. Die Gehäusehülse 13 und die Abstützhülse 20 sind mit einer gedrehten Fassung aufeinander abgestimmt, so dass ein guter Sitz der Gehäusehülse 13 in der Abstützhülse 20 erreicht wird. Somit kann das untere Ende 14 der Gehäusehülse 13 oberhalb des Ritzels 10 im Lagerbereich der Ritzelwelle sich in der Abstützhülse 20 abstützen. Die Abstützhülse 20 umfasst die Gehäusehülse über 360°. Des weiteren weist die Getriebehülse 13 im benachbarten Bereich zu dem Flansch 12 einen weiteren Abstützbereich 16 auf. Dieser Abstützbereich 16 ist in der montieren Position des Hauptgetriebes 7 in der passgenauen Aussparung 21 in dem Deckel 6' bzw. dem oberen Bereich der Getriebewanne 1 angeordnet. Diese Aussparung 21 ist als passgenaue Bohrung ausgebildet, die an den Abstützbereich 16 der Getriebehülse 13 angepasst ist. Die obere passgenaue Bohrung fluchtet in Draufsicht gesehen mit der unteren passgenauen Abstützhülse 20. Die Abstützhülse 20 ist in ihrem oberen Bereich mit dem Deckel 6' im Bereich der Aussparung 21 verschweißt.

Aufgrund der aufeinander passgenau abgestimmten im oberen Abstützbereich 16 der Getriebehülse 13 und der oberen passgenauen Bohrung 22 in dem Deckel 6' bzw. dem oberen Bereich der Getriebewanne und dem unteren Abstützbereich 15 der Gehäusehülse 13 in der passgenauen Abstützhülse 20, werden die auf das Ritzel 10 und das Hauptgetriebe 7 einwirkenden Kräfte direkt übertragen, so dass die Schraubverbindungen 23 zwischen dem Flansch 12 des Hauptgetriebes 7 und dem Deckel 6' bzw. dem oberen Bereich der Getriebewanne 1 lediglich zur sicheren Fixierung des Hauptgetriebes 7 gegenüber der Getriebewanne 1 dienen. Die Schraubverbindung 23 ist im Wesentlichen von Übertragungskräften zwischen dem Hauptgetriebe 7 und dem Stirnradgetriebe in der Getriebewanne 1 entlastet. Zur besseren Aussteifung der Getriebewanne 1 ist in der Mitte, im Bereich der Anordnung des Hauptgetriebes 7 zwischen den oberen Enden der vorderen 24 und hinteren 25 Wandung der Getriebewanne 1 bzw. des erweiterten Bereiches 18 der Getriebewanne 1 ein Verbindungsplatte 6' angeordnet, die vorzugsweise eingeschweißt ist.

Insbesondere durch die Abstützung der Getriebehülse 13 direkt oberhalb des Antriebsritzels 10 und des Stirnrades 4 des Stirnradtriebes der Getriebewanne 1 in der Abstützhülse 20, welche in der Getriebewanne 1 angebracht ist, wird der konstruktiv vorgegebene Abstand zwischen Stirnradwelle 5 und Ritzelwelle 8 sicher eingehalten, so dass eine vorschriftsmäßige Kraftübertragung zwischen Ritzel 10 und dem Stirnrad 4 erfolgt.

In nicht dargestellter Weise ist es auch möglich, die Ritzelwelle über das Ritzel 10 hinaus zu verlängern und in einem im Bodenbereich der Getriebewanne 1 angeordneten Lager, dessen Lagergehäuse mit der Getriebewanne verschweißt werden, kann, gelagert ist.

In einer anderen ebenfalls nicht dargestellten Ausführung kann die in die Getriebewanne 1 hineinragende Gehäusehülse 13 in die Getriebewanne 1 eingeschweißt sein.

## Patentansprüche

1. Kreiselegge mit Getriebewanne (1) mit mehreren Stirnrädern (4), die drehfest mit Rotorwellen (5) verbunden sind, die wiederum in der Getriebewanne mittels Lager gelagert sind, wobei die einzelnen Stirnräder nebeneinander angeordnet sind und miteinander im Eingriff stehen, mit einem oberhalb der Getriebewanne angeordneten Hauptgetriebe (7), welches eine vertikal angeordnete Antriebswelle (8) für den Antrieb der Stirnräder in der Getriebewanne aufweist, wobei die Antriebswelle in die Getriebewanne hineinragt und endseitig ein Ritzel (10) aufweist und mit einem der Stirnräder in Antriebsverbindung steht, wobei die Antriebswelle in dem Gehäuse des Hauptgetriebes oberhalb des Ritzels zumindest teilweise in einer in die Getriebewanne hineinragenden Gehäusehülse (13) des Gehäuses gelagert ist, wobei der Flansch (12) des Hauptgetriebes mittels Schraubverbindung (22) mit dem Deckel (6) und/oder dem oberen Bereich der Getriebewanne verschraubt ist, **dadurch gekennzeichnet, dass** in der Getriebewanne (1) eine Abstützhülse (20) angeordnet ist, dass die Gehäusehülse (13) in der Abstützhülse (20) angeordnet ist und durch sie hindurch ragt, dass die Abstützhülse (20) die Gehäusehülse (13) mit 360° umfasst.

2. Kreiselegge nach Anspruch 1, **dadurch gekennzeichnet, dass** im unteren Bereich der Gehäusehülse (13) ein das Ritzel (10) lagerndes Lager angeordnet ist, dass die Abstützhülse (20) eine derartige Länge aufweist und derart weit in die Getriebewanne (1) hineinragt, dass das untere Ende der Abstützhülse (20) zumindest annähernd bis zur Höhe des Beginnes des unteren Lagers des Ritzels (10) reicht.

3. Kreiselegge nach Anspruch 1, **dadurch gekennzeichnet, dass** die Abstützhülse (20) in die Getriebewanne (1) eingeschweißt ist.

4. Kreiselegge nach Anspruch 1, **dadurch gekennzeichnet, dass** die Abstützhülse (20) in ihrem unteren Bereich mit einem Abstützelement (17) an der Getriebewanne (1) abgestützt ist.

5. Kreiselegge nach einem oder mehreren der vorstehenden Ansprüche, **dadurch gekennzeichnet, dass** die Gehäusehülse (13) und die Abstützhülse (20) mit einer gedrehten Passung zueinander angeordnet ist.

6. Kreiselegge nach Anspruch 1, **dadurch gekennzeichnet, dass** die Antriebswelle über das Ritzel verlängert ist und in einem im Bodenbereich der Getriebewanne angeordneten Lager gelagert ist.

7. Kreiselegge nach Anspruch 1, **dadurch gekennzeichnet, dass** die in die Getriebewanne hineinragende Gehäusehülse in die Getriebewanne eingeschweißt ist.

## Claims

1. Rotary harrow having a gearbox (1) with a plurality of spur gears (4), which spur gears are non-rotatingly connected to rotor shafts (5), which shafts are mounted in turn in the gearbox by means of bearings, the individual spur gears being arranged adjacent to one another and being in engagement with one another, having a main transmission (7) arranged above the gearbox, which transmission exhibits a vertically arranged drive shaft (8) for the purpose of driving the spur gears in the gearbox, the drive shaft projecting into the gearbox and exhibiting at one end a pinion (10) and being in driving connection with one of the spur gears, the drive shaft being mounted in the housing of the main transmission above the pinion at least partially in a housing sleeve (13) of the housing, the flange (12) of the main transmission being screwed by means of a screwed connection (22) to the cover (6) and/or the upper area of the gearbox, **characterized in that** arranged inside the gearbox (1) is a supporting sleeve (20), **in that** the housing sleeve (13) is arranged in the supporting sleeve (20) and projects through it, and **in that** the supporting sleeve (20) surrounds the housing sleeve (13) through 360°.

2. Rotary harrow according to Claim 1, **characterized in that** a bearing supporting the pinion (10) is arranged in the bottom area of the housing sleeve (13), **in that** the supporting sleeve (20) exhibits a length and projects into the gearbox (1) for a distance such that the bottom end of the supporting sleeve (20) reaches at least approximately as far as the level of the starting point of the lower pinion bearing (10).

3. Rotary harrow according to Claim 1, **characterized in that** the supporting sleeve (20) is welded to the gearbox (1).

4. Rotary harrow according to Claim 1, **characterized in that** the supporting sleeve (20) is supported in its bottom area on the gearbox (1) via a supporting element (17).

5. Rotary harrow according to one or more of the preceding claims, **characterized in that** the housing sleeve (13) and the supporting sleeve (20) are arranged in relation to one another with a machined mounting.

6. Rotary harrow according to Claim 1, **characterized in that** the drive shaft extends beyond the pinion and is mounted in a bearing arranged in the area of the bottom of the gearbox.

7. Rotary harrow according to Claim 1, **characterized in that** the housing sleeve projecting into the gearbox is welded to the gearbox.

## Revendications

1. Herse rotative comportant :
- un caisson de transmission (1) recevant plusieurs pignons droits (4) reliés solidairement en rotation aux arbres (5) des rotors, ces arbres étant eux-mêmes montés par des paliers dans le caisson de transmission,
* les différents pignons droits étant juxtaposés et en prise les uns avec les autres,
- une transmission principale (7) installée au-dessus du caisson de transmission et comportant un arbre d'entraînement (8), vertical, pour entraîner les pignons droits du caisson de transmission,
* l'arbre d'entraînement pénétrant dans le caisson de transmission et son extrémité portant un pignon (10) en prise avec les pignons droits dans le sens de l'entraînement,
* l'arbre d'entraînement étant monté dans le boîtier de la transmission principale au-dessus du pignon au moins en partie dans un manchon de boîtier (13) appartenant au boîtier de la transmission principale et pénétrant, en partie, dans le caisson de transmission,
* la bride (12) de la transmission principale étant vissée par des liaisons à vis (22) au couvercle (6) et/ou à la zone supérieure du caisson de transmission,
**caractérisée en ce que**
le caisson de transmission (1) comporte un manchon de support (20), le manchon de boîtier (13) est logé dans le manchon de support (20), et passe dans celui-ci,
le manchon de support (20) entoure le manchon de boîtier (13) sur 360°.

2. Herse rotative selon la revendication 1,
**caractérisée en ce que**
la zone inférieure du manchon de boîtier (13) comporte un palier recevant le pignon (10),
le manchon de support (20) est dans une position telle et pénètre suffisamment dans le caisson de transmission (1) pour que l'extrémité inférieure du manchon de support (20) arrive au moins sensiblement jusqu'à hauteur du début du palier inférieur du pignon (10).

3. Herse rotative selon la revendication 1,
**caractérisée en ce que**
le manchon de support (20) est soudé dans le caisson de transmission (1).

4. Herse rotative selon la revendication 1,
**caractérisée en ce que**
le manchon de support (20) s'appuie par sa zone inférieure avec un élément d'appui (17) contre le caisson de transmission (1).

5. Herse rotative selon l'une des revendications précédentes,
**caractérisée en ce que**
le manchon de boîtier (13) et le manchon de support (20) sont prévus avec un ajustage tourné.

6. Herse rotative selon la revendication 1,
**caractérisée en ce que**
l'arbre d'entraînement est prolongé au-delà du pignon et vient dans un palier prévu au niveau du fond du caisson de transmission.

7. Herse rotative selon la revendication 1,
**caractérisée en ce que**
le manchon de boîtier qui pénètre dans le caisson de transmission est soudé dans le caisson de transmission.
